# EUROPEAN PATENT APPLICATION

(11) **EP 3 101 501 A1**
(43) Date of publication of application: **07.12.2016**
(21) Application number: 15170030.9
(22) Date of filing: 01.06.2015
(51) Int. Cl.: G05B 23/02, G06F 11/34

(54) **METHOD AND APPARATUS FOR MONITORING PERFORMANCES OF MACHINES**

(71) Applicant: ABB Technology Oy, 00380 Helsinki (FI)
(72) Inventor: Orkisz, Michal, 30-076 Krakow (PL)
(74) Representative: Kolster Oy Ab

(57) **Abstract**

The present disclosure describes a method and an apparatus (11) for monitoring performances of machines (10) in an arrangement comprising a plurality of machines. The machines each produce event information (e₁...eₘ), and event history entries are generated into at least one event history collection on the basis of the event information produced by the machines. The at least one event history collection (13) is analysed to find behavioural events of the machines, and computational distances between the machines are determined on the basis of the basis of the found behavioural events. The performances (P₁...Pₙ) of the machines are quantified on the basis of the calculated computational distances.

## Description

### FIELD

The present disclosure relates to arrangements comprising a plurality of machines, and more particularly to monitoring the performance of the machines.

### BACKGROUND INFORMATION

In an industrial process, an unexpected interruption of the process is typically very undesirable. Shutdown of an industrial process because of a need for an unscheduled maintenance break may cause significant monetary losses. Therefore, it may be very desirable to be able to predict possible maintenance needs.

Various methods have been developed for pre-emptively detecting possible faults. For example, a detection method for a machine may be based on monitoring measured quantities of the machine. If the machine starts to show performance characteristics associated with a fault, the machine may be scheduled for maintenance. In case of an electric drive, for example, various electrical quantities, such as power, rotational speed, voltages and currents may be available to be monitored since they are being used by the control system of the electric drive.

In order to determine if a machine operates within or outside normal operating limits, a set of reference data may have to be generated. Such reference data may be based on prior performance values of the machine, for example. However, building a statistically sufficient amount of reference data may be time-consuming.

If there is a group of machines with the same operating parameters and measured quantities, the measured quantities of the machines may be used to form a set of reference data. The current performance of a machine may be compared with the performances of the other machines, and a decision on whether the machine operates within the normal operating limits may be made on the basis of the comparison. In a windfarm, for example, various parameters and quantities of wind turbines, such as power, speed, blade pitch angle, etc., may be monitored in order to determine the performances of the turbines, and poorly performing wind turbines may be identified by comparing the performances of the turbines.

In this approach, however, a large amount of data may be continuously generated. In order to cope with the large amount of continuous data, a monitoring system may have to implement a costly data transfer system. Further, methods used for analysing the data may be complex and/or computationally intensive, which may further add to the cost of the monitoring system.

### BRIEF DESCRIPTION OF THE INVENTION

An object of the present invention is to provide a method and an apparatus for implementing the method so as to alleviate the above disadvantages. The objects of the invention are achieved by a method and an arrangement which are characterized by what is stated in the independent claims. The preferred embodiments of the invention are disclosed in the dependent claims.

A machine in an industrial or other application may be linked to an event history collection, such as an event or fault log, so that various types of behavioural events of the machine generate event entries into the log for diagnostics purposes. For example, when predetermined conditions, such as equipment failures, excessive process demands, and control errors, are detected in an application comprising an electric drive, normal operation of the electric drive may be halted and one or more events entries may be generated into the event/fault log. The event/fault log may also contain alarms which may be generated when pre-set limits are exceeded but which do not halt the operation of the machine. The machine, such as an electric drive, may also consist of multiple subunits, which may fail independently of each other or together. The subunits may generate entries to the event/fault log. A further source of event data may be Key Performance Indicators computed periodically or upon other events based on the performance characteristics of the machine.

The information stored in the event/fault logs may be used for indicating an increase in the probability of a fault in a machine. The contents of the event/fault log of a machine may be compared with event/fault logs of other machines operating under comparable operating conditions/parameters in order to determine how much the performance of the machine differs from the other machines. Current performance characteristics of the machine may be calculated on the basis of behavioural events stored into the event/fault log. The performance characteristics may be compared with performance characteristics calculated for machines with similar operating parameters and conditions. If the performance of the machine significantly deviates from the performances of the other machines, the machine in question may be subjected to closer inspection and/or scheduled for maintenance, for example.

A method according to the present disclosure provides an early warning system for detecting problems in a group of machines. It is able to provide feedback about defective equipment and problematic subsystems and to quickly identify equipment requiring attention.

Since the amount of analysed data in a method according to the present disclosure may be very restricted compared with the known methods, the method according to the present disclosure may be implemented with lower computational capabilities. Further, requirements for implementing data transfer in a method according to the present disclosure are low, particularly if performance characteristics are calculated locally on each machine and if only the values of the performance characteristics are transmitted.

### BRIEF DESCRIPTION OF THE DRAWINGS

In the following the invention will be described in greater detail by means of preferred embodiments with reference to the attached drawings, in which

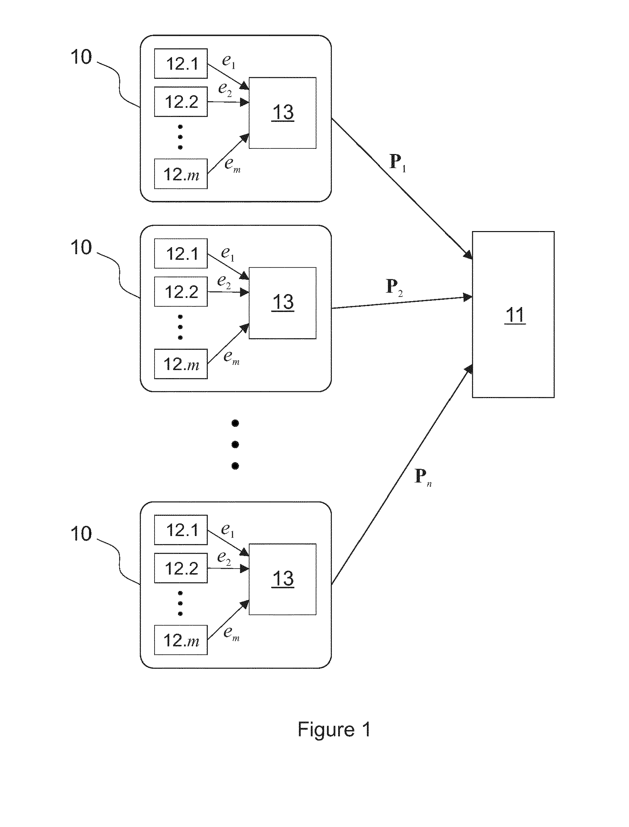

Figure 1 shows an exemplary arrangement implementing a method according to the present disclosure.

### DETAILED DESCRIPTION OF THE INVENTION

The present disclosure describes a method for monitoring performances of machines in an arrangement comprising a plurality of machines each producing event information. The machines may be electric drives, devices comprising electric drives, motor controllers, protection relays or other devices capable of producing event logs, for example. The machines may be units operating in parallel (e.g., powering parallel sections of a rolling mill), units operating under similar conditions (e.g., driving similar pumps or compressors), or even units operating under different conditions. Each machine may comprise one or more subunits. These subunits may be power electronics switches, control electronics, input/output devices, water cooling units, for example. Additionally, external sensors may be connected to the machine in order to indicate problems with connected devices. The external sensors may be used to indicate problems with temperatures of a transformer or a motor, for example..

Figure 1 shows an exemplary arrangement implementing a method according to the present disclosure. In Figure 1, machines 10 are connected to a monitoring apparatus 11. The machines 10 may be arrangements of electric motors coupled to frequency converters, for example. Each machine 10 further comprises subunits 12.1 to 12.*m*. For example, an inverter bridge (or semiconductor switches of an inverter bridge) or a cooling unit of a frequency converter may act as subunits.

Although the machines in Figure 1 are shown as being identical in composition, the machines in a method according to the present disclosure may also differ from each other and/or comprise different subunits.

In a method according to the present disclosure, event history entries may be generated to at least one event history collection on the basis of the event information produced by the machines, and the event history collection may be analysed to find behavioural events of the machines. The behavioural events reflect the performances of the machines, and in order to determine similarities/dissimilarities between the performances of the machines, computational distances between the machines may be determined on the basis of the found behavioural events. The performances of the machines may then be quantified on the basis of the calculated computational distances. If the performance of the machine significantly differs from the performances of the other machines, the machine in question may be subjected to closer inspection and/or scheduled for maintenance, for example.

The event information may represent various aspects of operation of the machine. For example, when the normal operation of a machine is stopped due to detection of a certain condition, one or more event history entries may be added to an event history collection, such as an event or fault log. Equipment failures (e.g. burned semiconductors), excessive process demands (e.g., overcurrent, overload), control errors (e.g. too many on-off cycles in a unit of time) may generate event history entries, for example. In addition, the event history entries may be alarms or warnings, i.e. events that notify of abnormal or undesired behaviour but do not halt the operation of the machine. The event history entries may also be notifications that inform of events not related to any undesired behaviour, or Key Performance Indicators based on measured values. Some event information may be directly generated by the machine. Some event information may be determined by using additional sensors/measurements.

In a method according to the present disclosure, the event history collection formed by the event history entries may be decentralised or centralised. Each machine may have their own, local event collection or event history entries generated by the machines may be stored into a central event history collection. The latter alternative may be preferable if there is a necessity of time synchronization between the events generated by the machines but implementing time synchronization between local event collections would be unfeasible.

In the exemplary arrangement of Figure 1, the subunits 12.1 to 12.*m* generate event information signals *e*₁ to *eₘ*. The signals *e*₁ to *eₘ* may be saturation voltages of individual semiconductor switches in an inverter bridge that are monitored in order to implement an over-current detection. If a semiconductor switch starts to generate more over-current faults, it may be considered as a sign of the switch failing. In Figure 1, each machine 10 further comprises a local event history collection in the form of an event log 13. Entries are generated to the event logs 13 on the basis of the event information signals *e*₁ to *eₘ*. Although Figure 1 shows one event information signal per subunit, the number of signals per subunit is not limited to one. For example, some subunits may generate no event information signals while others may generate more than one event information signals.

In a method according to the present disclosure, event history collection may contain various types of entries which may directly or indirectly relate to different kinds of undesirable or desirable instances. The entries as themselves may be insufficient for describing some behavioural events that affect the performance of the machine. Therefore, in order to analyse the (at least one) event history collection, at least one entry pattern representing a behavioural event may be defined, and the event history collection may be scanned to find the entry pattern. The (at least one) entry pattern may be formed by a type of event history entries or a sequence of event history entries, for example. A certain type of event history entry caused by a certain kind of malfunction of the machine may represent an entry pattern. Entry patterns may also be represented by episodes, i.e. sequences of related event history entries associated with a single root cause. Time evolution of an operating parameter or condition may also be used as an entry pattern. For example, an increase in frequency of certain event history entries may act as an entry pattern indicating an impending behavioural event. For example, an increase in the rate of over-current alarms of a semiconductor switch may be used to indicate that the switch will be failing soon.

On the basis of found behavioural events, computational distances representing similarities/differences between performances of machines may be determined. The determining of the computational distances may comprise calculating present performance characteristics of the machines on the basis of the found behavioural events, and calculating the computational distances between the machines on the basis of the present performance characteristics. The present performance characteristics of a machine may be represented by a performance characteristics vector having at least one dimension, for example. A value (in one or more dimensions) may be assigned to the (at least one) dimension on the basis of a measurable aspect of a behavioural event. The value may reflect the type of the event, for example. The value may also reflect identity, count, frequency, or change of frequency of the event or Key Performance Indicators based on measurements around the event. The value may comprise dimensions that represent any various aspects of the behavioural event. This assignment may be performed in many different ways. An example, by no means restrictive, is to use Principal Component Analysis to reduce the dimensionality.

Calculating the computational distances may comprise calculating the Euclidian distance between the performance characteristics vectors, for example. However, the calculation of the computational distance is not restricted to using the Euclidian distance. Any other method for calculating a computational distance may be used, e.g. City Block, Cosine, Bray-Curtis dissimilarity.

In Figure 1, event information signals *e*₁ to *eₘ* form the basis for performance characteristics of machines 10. Event information signals *e*₁ to *eₘ* generate event history entries to the event logs 13 of the machines 10. The machines 10 then generate performance characteristics vectors **P**₁ to **P***ₙ* on the basis of the entries in their event logs 13. The monitoring apparatus 12 receives the vectors **P**₁ to **P***ₙ* and calculates the Euclidian distances between the performance characteristics vectors. A method according to the present disclosure may also take the spent service life time of a machine into account when determining the computational distances between machines. The machines may have been initiated at different times and may manifest different performance characteristics because they are in different stages of the aging process. If the performance characteristics of each machine are stored from the beginning of the service, the distances between machines may be determined by using performance characteristics with matching service time values.

In a method according to the present disclosure, determining the computational distances may also comprise calculating the distances between machines directly on the basis of the event history collections. For example, the distances may be calculated by doing a pairwise comparison between collected event history entries of different machines. This may be desirable when trying to highlight various aspects of similarity, e.g. type vs. frequency of episodes.

In a method according to the present disclosure, the quantifying of the performances of the machines may comprise displaying the machines on a graphical user interface. The machines may be clustered on a display so that their relative positions reflect the calculated computational distances. The method may comprise a visualization step in which a grouping of all devices is shown in such a way that similar devices appear together and deviating ones appear distant. For example, displaying the performances of the machines may be implemented by using a graphical representation of a self-organising map.

A method according to the present disclosure may be used in an exemplary arrangement, where at least one of the machines is an electrical drive or comprises an electrical drive, for example. An event history collection may be generated on the basis of the event information produced by the electric drive, and the event history collection may be analysed to find behavioural events of the machines. Based on found behavioural events, computational distances of the (at least one) electric drive to other electric drives may be calculated. The other electric drives may be other electric drives in the arrangement, or electric drives in other arrangements. On the basis of the calculated computational distances, the performance of the electric drive may be quantified. Electrical drives may be clustered on a display on the basis of the computational distances. If the performance of the (at least one) electric drive significantly differs from that of other electrical drives, the electric drive may be subjected to closer inspection and/or scheduled for maintenance, for example.

Although the examples in above text describe a method according to the present disclosure being used in association with an electric drive, the method is not limited to applications comprising electric drives. Other devices capable of generating event logs could be considered, e.g. motor controllers, protective relays, solar inverters, HVDC station units, etc.

The techniques described herein may be implemented by various means so that an apparatus implementing one or more functions described with an embodiment comprises not only prior art means, but also specific means for implementing the one or more functions described with an embodiment and it may comprise separate means for each separate function, or specific means may be configured to perform two or more functions. The specific means may be software and/or software-hardware and/or hardware and/or firmware components (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein.

It is obvious to a person skilled in the art that the inventive concept can be implemented in various ways. The invention and its embodiments are not limited to the examples described above but may vary within the scope of the claims.

## Claims

1. A method for monitoring performances of machines in an arrangement comprising a plurality of machines, wherein the machines each produce event information, and wherein the method comprises
generating event history entries into at least one event history collection on the basis of the event information produced by the machines,
analysing the at least one event history collection to find behavioural events of the machines,
determining computational distances between the machines on the basis of the found behavioural events, and
quantifying the performances of the machines on the basis of the calculated computational distances.

2. A method according to claim 1, wherein at least one of the machines is an electrical drive or comprises an electrical drive.

3. A method according to claim 1 or 2, wherein the analysing of the at least one event history collection comprises
defining at least one entry pattern representing a behavioural event, wherein the at least one entry pattern is formed by a type of event history entries or a sequence of event history entries, and
scanning the at least one event history collection to find the entry pattern.

4. A method according to any one of claims 1 to 3, wherein determining of the computational distances comprises
calculating present performance characteristics of the machines on the basis of the found behavioural events, and
calculating the computational distances between the machines on the basis of the present performance characteristics.

5. A method according to claim 4, wherein the performance characteristics of a machine are represented by a performance characteristics vector having at least one dimension, and wherein the method comprises
assigning a value to the at least one dimension on the basis of a measurable aspect of a behavioural event, such as identity, count, frequency, or change of frequency of the behavioural event.

6. A method according to any one of the preceding claims, wherein the quantifying of the performances of the machines comprises
displaying the machines on a graphical user interface so that their relative positions reflect the calculated computational distances.

7. A method according to claim 6, wherein the displaying of the performances of the machines is performed by using a graphical representation of a self-organising map.

8. An arrangement for monitoring performances of machines in an arrangement comprising a plurality of machines, wherein the machines each produce event information, wherein the apparatus comprises means configured to carry out a method according to any one of the preceding claims.

9. An arrangement according to claim 8, wherein at least one of the machines is an electrical drive or comprises an electrical drive.

10. A computer program adapted to perform a method according to any one of claims 1 to 7.

11. A computer-readable storage medium/data carrier comprising a computer program according to claim 10.
